Europäisches Patentamt

European Patent Office

Office européen des brevets

(11) Veröffentlichungsnummer: **0 460 485 A1**

(12) **EUROPÄISCHE PATENTANMELDUNG**

(21) Anmeldenummer: **91108544.7**

(22) Anmeldetag: **24.05.91**

(30) Priorität: **06.06.90 DE 9006391 U**

(43) Veröffentlichungstag der Anmeldung:
**11.12.91 Patentblatt 91/50**

(84) Benannte Vertragsstaaten:
**AT BE CH DE DK ES FR GB IT LI NL SE**

(51) Int. Cl.5: **F16H 19/00, E06B 9/08**

(71) Anmelder: **MARANTEC ANTRIEBS- UND STEUERUNGSTECHNIK GMBH & CO., PRODUKTIONS OHG**
**Remser Brook 11**
**W-4834 Marienfeld(DE)**

(72) Erfinder: **Hörmann, Michael, Dipl.-Ing.**
**Remser Brook 11**
**W-Marienfeld(DE)**

(74) Vertreter: **Flügel, Otto, Dipl.-Ing.**
**Wissmannstrasse 14, Postfach 81 05 06**
**W-8000 München 81(DE)**

(54) **Getriebe zur Überführung einer rotatorischen in eine translatorische Bewegung.**

㊄ Getriebe zur Überführung einer rotatorischen in eine translatorische Bewegung mit einem Rotationsantrieb und einem translatorisch bewegbar gehaltenen Bewegungsübertragungsglied (5), das an den Antrieb im Bereich einer Führung getrieblich angeschlossen ist und dessen Bewegung bzw. Betrieb in Abhängigkeit von der zurückgelegten Wegstrecke des Bewegungsübertragungsgliedes dadurch begrenzbar ist, das an dem Bewegungsübertragungsglied ein Steuerrad (25) über einen die Translationsbewegung des Bewegungsübertragungsgliedes in eine Rotationsbewegung des Steuerrades wandelnden Verzahnungseingriff (26, 27) angeschlossen ist und das an dem Steuerrad wenigstens ein Betätigungsglied vorgesehen ist, daß an wenigstens einem Schalter in Abhängigkeit von der Verdrehstellung des Steuerrades angreift.

EP 0 460 485 A1

Die Erfindung betrifft ein Getriebe zur Überführung einer rotatorischen in eine translatorische Bewegung, vorzugsweise angeschlossen an ein Antriebsmotoraggregat, insbesondere für das Bewegen von Gegenständen über eine bestimmte, gegebenenfalls justierend einstellbare Strecke hinweg, wie Torblätter, mit einem Rotationsantrieb und einem translatorisch bewegbar gehaltenen Bewegungsübertragungsglied, das an den Antrieb im Bereich einer Führung - insbesondere über eine formschlüssige Getriebeverbindung - getrieblich angeschlossen ist. Solche Getriebe werden für translatorisch hin- und hergehende Bewegung von Gegenständen verwendet, die über verschieden lange Bewegungsstrecken und/oder solche bewegt werden sollen, die exakt einstellbar sind.

Der Erfindung liegt die Aufgabe zugrunde, einen solchen Antrieb mit einer die Begrenzung der Bewegung bzw. des Betriebes des Antriebsaggregates in Abhängigkeit von der zurückgelegten Wegstrecke - vorzugsweise einstellbar - festlegenden Begrenzungseinrichtung zu versehen.

Diese Aufgabe wird erfindungsgemäß dadurch gelöst, daß an dem Bewegungsübertragungsglied ein Steuerrad über einen die Translationsbewegung des Bewegungsübertragungsgliedes in eine Rotationsbewegung des Steuerrades wandelnden verzerrungsfreien Eingriff angeschlossen ist und daß an dem Steuerrad wenigstens ein Betätigungsglied für den Angriff an wenigstens einem Schalter vorgesehen ist. Unter dem bewegungswandelnden, verzerrungsfreien Eingriff zwischen dem Bewegungsübertragungsglied und dem Steuerrad soll grundsätzlich alles verstanden werden, was unter den auftretenden Kräften nach Art eines formschlüssigen Eingriffes eine verzerrungsfreie, d.h. schlupffreie, Bewegungsübertragung zwischen dem Bewegungsübertragungsglied und dem Steuerrad gewährleistet. In diesem weiten Sinne kann man auch von einem Verzahnungseingriff sprechen.

Die Betätigungsstellung zwischen den Betätigungsgliedern des Steuerrades und den Schaltern, beispielsweise Endschalter oder auch Zwischenschalter, ist vorzugsweise einstellbar, was je nach Ausführungsbeispiel durch Verstellen der Schalter gegenüber den insoweit fest mit dem Steuerrad verbundenen Betätigungsgliedern oder aber durch Verstellen der Betätigungsglieder gegenüber dem Steuerrad bei ortsfest angeordneten Schaltern erreicht werden kann. Die Betätigungsglieder können dabei in bevorzugter Ausführung im Rahmen einer oder mehrerer Nockenscheiben vorgesehen sein, die vorzugsweise in koaxialer Anordnung zu dem Steuerrad mit diesem reibschlüssig in Verbindung stehen. Zur Verstellung der Betätigungsglieder wird die oder werden die Nockenscheiben sodann gegen die Reibkraft gezielt verdreht, und zwar vorzugsweise mit Hilfe von über Verzahnungen - Kegelrad- oder Stirnradverzahnungen - mit den Nockenscheiben im Verbindung stehenden Einstellgliedern. Die Reibkraft zwischen Nockenscheibe und Steuerrad ist so groß, daß ohne gezielten Angriff an einem Einstellglied die zugehörige Nockenscheibe zuverlässig mit dem Steuerrad rotierend kraftschlüssig verbunden ist.

In besonders bevorzugter Ausführungsform ist an dem Bewegungsübertragungsglied eine Verzahnung ausgebildet, deren Zähne sich in einem spitzen Winkel zur translatorischen Bewegungsrichtung des Bewegungsübertragungsgliedes erstrecken und in Zähne einer Verzahnung eingreifen, die über den Stirnrandbereich des Steuerrades geführt sind, so daß beide Verzahnungen den Verzahnungseingriff bilden. Die zur Bewegungsrichtung des Bewegungsübertragungsgliedes spitzwinklige Ausrichtung der Zähne, d.h. deren Verlauf nur wenig schräg aus der Bewegungsrichtung heraus versetzt, führt dazu, daß ein großes Übersetzungsverhältnis zwischen der zurückgelegten Strecke des Bewegungsübertragungsgliedes und der Winkelbewegung des Steuerrades eintritt. Dabei ist es möglich, die Verzahnung am Umfang des Steuerrades als Stirnradverzahnung auszubilden, also mit parallel zur Rotationsachse des Steuerrades verlaufender Zahnrichtung. In weiterhin bevorzugter Ausführung wird jedoch der Zähneverlauf der Verzahnung im Mantelbereich des Steuerrades spitzwinklig zu dessen Rotationsrichtung ausgerichtet, so daß bei Eingriff der Verzahnung des Bewegungsübertragungsgliedes in die Verzahnung des Steuerrades dessen Rotationsachse parallel zur translatorischen Bewegungsrichtung des Bewegungsübertragungsgliedes verläuft.

Auf diese Weise ist es möglich, die längste Bewegungsstrecke des Bewegungsübertragungsgliedes in einer Umdrehung des Steuerrades abzubilden. Dies hat zu Folge, daß das Steuerrad zum Träger von Betätigungsgliedern werden kann, die ortsfeste Schalter betätigen. So kann man beispielsweise und in bevorzugter Anwendung des Antriebes ein Torblatt zwischen seiner Schließlage und seiner Öffnungslage bewegen, wobei das Steuerrad jeweils nur eine knappe Umdrehung ausführt. Bevorzugt sind dabei die die Endschalter für die beiden Torblattstellungen aussteuernden Betätigungsglieder an dem Steuerrad um dessen Achse herum verschwenkbar gelagert und in verschiedenen Einstellagen festlegbar, so daß man denselben Antrieb für unterschiedliche Torblattwege und insbesondere für die genaue Einstellung des Torblattweges verwenden kann. Dies gilt natürlich in ähnlicher Weise für die Bewegungsstrecken anderer, mit dem Antrieb zu bewegender Gegenstände.

Eine spezielle Art der Ausbildung des hier als bekannt vorausgesetzten Getriebes zur Überführung einer rotatorischen in eine translatorische Bewegung ist beispielsweise in der EP-PS 0 165 497 beschrieben und wird im Rahmen der vorliegenden Erfindung und Ausführungsbeispiele besonders bevorzugt eingesetzt. Es handelt sich dabei um einen Antrieb, dessen im Bereich einer Führung an den Rotationsantrieb angeschlossene Bewegungsübertragungseinrichtung in Bewegungsrichtung in wenigstens zwei Stränge längsgeteilt ausgebildet ist, die einen Endes außerhalb der Führung quer zur Führungsrichtung verformbar jeweils für sich getrennt geführt und anderen Endes zusammengeführt ineinandergreifend gegen ein seitliches Entfernen voneinander gehalten werden. Durch den Eingriff ineinander, der über eine Verzahnung erfolgt, ist das Bewegungsübertragungsglied aus den ineinandergreifenden Strängen sowohl auf Zug als auch auf Druck belastbar, wie dies in dem vorerwähnten Patent ausführlich dargelegt ist. Außerhalb der geradlinigen Bewegungsstrecke, die von der Führung markiert wird, werden die Stränge getrennt geführt und aus der translatorischen Bewegungsrichtung abgeleitet, wodurch ein entsprechend raumsparender Aufbau erreicht wird. Hinsichtlich der Einzelheiten und Ausführungen dieses Antriebes wird auf den Gesamtinhalt der vorerwähnten Patentschrift ausdrücklich Bezug genommen.

Die vorgeschilderten und weitere bevorzugte Ausführungen ergeben sich aus den Unteransprüchen, insbesondere im Zusammenhang mit den in der Zeichnung wiedergegebenen Ausführungsbeispielen, deren nachstehende Beschreibung die Erfindung näher erläutert. Es zeigen

Figur 1:
Eine schematische Draufsicht auf das Steuerrad und einen Teilbereich des mit diesem im Verzahnungseingriff stehenden Bewegungsübertragungsgliedes des nicht weiter dargestellten Antriebes;

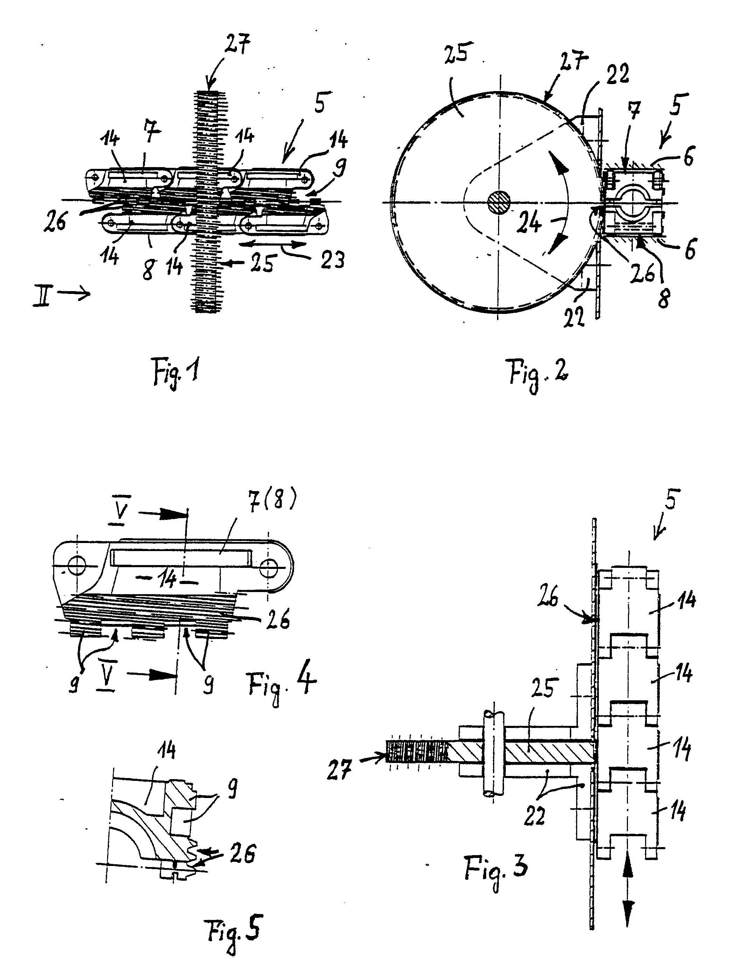

Figur 2:
Eine schematisierte Ansicht in Richtung des Pfeiles II von Figur 1;

Figur 3:
Eine gegenüber Figur 2 um 90° gedrehte Ansicht unter Teilschnitt des Steuerrades, so daß dessen Achse von der Seite her sichtbar ist;

Figur 4:
Eine Seitenansicht eines Abschnittes eines der Zweige des Bewegungsübertragungsgliedes des Antriebes auf die Seite, die mit dem Steuerrad in getriebliche Verbindung tritt;

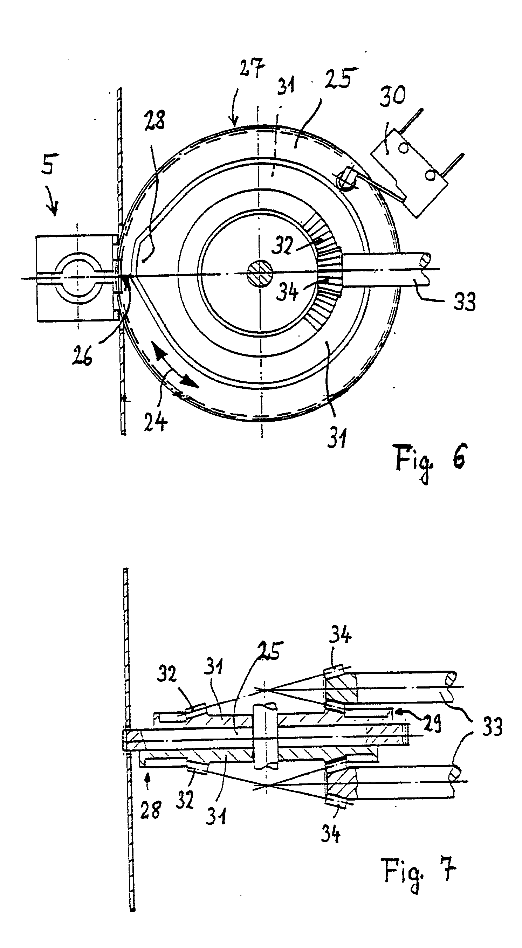

Figur 5:
Einen Teilschnitt nach der Linie V-V in Figur 4;

Figuren 6 und 7:
Seitenansicht und senkrecht dazugeführte Schnittansicht eines Ausführungsbeispieles mit einer ersten Betätigungsglied-Ausbildung und -Steuerung;

Figuren 8 und 9:
Seitenansicht und Teilschnittbild einer zweiten Ausführung einer Betätigungsglied-Ausbildung und -Steuerung.

In den Figuren 1 bis 5 ist unter Zugrundelegung des Getriebes nach dem vorstehend genannten Patent die Ankopplung zwischen dessen Bewegungsübertragungsglied 5 und dem Steuerrad 25 für die Wegstreckenmessung bzw. Wegstreckenbegrenzung des Bewegungsübertragungsgliedes 5 wiedergegeben. Das Bewegungsübertragungsglied 5 besteht aus zwei Strängen 7 und 8, die jeweils aus einer Kette in Aufeinanderfolge aneinandergelenkten Einzelgliedern 14. Die Einzelglieder 14 der Stränge 7 und 8 greifen über eine Verzahnung 9 ineinander, die zwischen den einander gegenüberliegenden Seiten der Stränge 7 und 8 vorgesehen ist. Das Bewegungsübertragungsglied 5 des nicht dargestellten Antriebes bewegt sich geradlinig in Richtung des Pfeiles 23 hin- und hergehend; und um diese Bewegung in eine hin- und hergehende Bewegung in Richtung des Doppelpfeiles 24 in Figur 2 auf das Steuerrad 25 übertragen zu können, ist das Bewegungsübertragungsglied 5 mit einer zusätzlichen Verzahnung 26 versehen, deren Zahnverlauf spitzwinklig zur Längserstreckung des Bewegungsgliedes 5 ausgebildet ist, wie dies insbesondere aus den Figuren 1 und 4 hervorgeht. Die Stirnseite bzw. Mantelfläche des Steuerrades 25 ist mit einer Verzahnung 27 versehen, deren Zähne spitzwinklig zur Rotationsachse des Steuerrades 25 verlaufen, wie dies in Figur 1 und 3 verdeutlicht ist. Das Steuerrad 25 ist mittels eines Lagerbockes 22, der mit einer Führung 6 gehalten ist, die die beiden Stränge 7 und 8 im Eingriffszustand der Verzahnung 9 geradlinig leiten, derart drehbar gehalten, daß die Verzahnung 26 des Bewegungsübertragungsgliedes 5 in die Verzahnung 27 des Steuerrades 25 eingreift, wie dies insbesondere aus den Figuren 2 und 3 ersichtlich ist. Die Figuren 3 und 4 lassen insbesondere den Zahnverlauf der Verzahnungen 26 und 27 in strichpunktierter Darstellung erkennen, die Teilschnitt-Darstellung nach Figur 5 die Zahnausbildung der Verzahnung 26 beispielsweise. Aus dem nur wenig von der Längsrichtung des Bewegungsübertragungsgliedes abweichenden Verlauf der Zähne der Verzahnung 26 bzw. dem ebensowenig aus der Achsrichtung abweichenden Verlauf der Zähne der Verzahnung 27 des Steuerrades 25 ist ersichtlich, daß bei Eingriff der Verzahnung 26 in die Verzahnung 27 ein großes Übersetzungsverhältnis zwischen der translatorischen Bewegungsstrecke des Bewegungsübertragungsgliedes 5 und der Umlaufwinkelstrecke des Steuerrades 25 erreicht wird. Auf diese Weise ist es möglich, die größte translatorische Bewegungsübertragungsstrecke des Antriebes in eine einzige Umdrehung des Steuerrades umzuset-

zen. Eine solche 360° - Drehung des Steuerrades entspricht also bei Anwendung auf ein Tor der maximalen Torhöhe, beispielsweise für ein Deckengliedertor betrachtet.

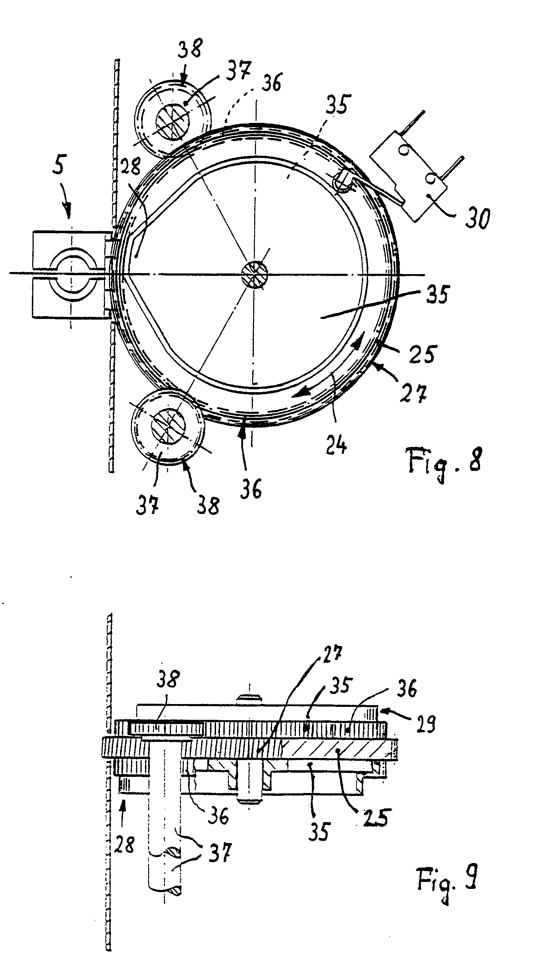

Wie anhand des Beispieles nach den Figuren 6 und 7 sowie auch des weiteren Beispieles nach den Figuren 8 und 9 gezeigt, ist beidseits des Steuerrades 25 je eine Nockenscheibe 31 (Figuren 8 und 9) bzw. 35 (Figuren 8 und 9) vorgesehen, deren Nocken die Betätigungsglieder 28 und 29 bilden und die von dem Steuerrad 25 über Reibung mitgenommen werden. Zu diesem Zwecke können die aneinanderanliegenden Stirnflächen des Steuerrades und der Nockenscheiben entsprechend aufgerauht oder mit einem Reibbelag versehen sein. In die Umlaufbahn der Nocken, d.h. der Betätigungsglieder 28 und 29, ragen Betätigungsglieder von Schaltern hinein, von denen nur einer 30 dargestellt ist. Die Schalter können an verschiedenen bzw. bestimmten Stellen ortsfest gehalten sein, während die Nocken und damit Betätigungsglieder 28 und 29 durch eine gegen die Reibung mit dem Steuerrad erfolgende Drehung der Nockenscheiben 31 bzw. 35 in Umfangsrichtung gegenüber dem Steuerrad 25 einstellbar sind, so daß zwischen den Schaltern und den Nocken ganz bestimmte Drehwinkelstrecken zur Verfügung gestellt bzw. eingestellt werden können. Durch die Einstellung der relativen Verdrehlage zwischen den Nockenscheiben und dem Steuerrad lassen sich die Nocken an die genaue Endlage der Offen- und Zu-Stellung des Torblattes anpassen, so daß die auf die Endschalter entsprechend genau einwirkenden Nockenscheiben die elektrische Abschaltung des Antriebes zum richtigen Zeitpunkt bewirken können.

Bei dem Ausführungsbeispiel nach den Figuren 6 und 7 sind die Nockenscheiben 31 an ihren dem Steuerrad 25 abgewandten Stirnseiten mit Kegelradzahnkränzen 32 versehen, in welche jeweils ein Kegelzahnrad 34 eines als Welle ausgebildeten Einstellgliedes 33 eingreift, wie dies insbesondere Figur 7 wiedergibt. Durch Verdrehen der Einstellglieder von Hand kann man die zugehörigen Nockenscheiben in bestimmte Verdrehstellungen gegenüber dem Steuerrad 25 gegen die Reibkraft verstellen. Eine somit gewonnene Einstellung bleibt bei Antrieb über das Steuerrad auf die Nockenscheiben erhalten.

Bei dem Ausführungsbeispiel nach den Figuren 8 und 9 weisen die Nockenscheiben einen stirnverzahnten Abschnitt auf, deren Stirnverzahnung 36 mit der Stirnverzahnung 38 von wellenförmigen Einstellgliedern 37 kämmt, deren Achsen parallel zur Achse des Steuerrades verläuft und die wiederum durch Verdrehen von Hand eine Änderung der Verdrehstellung zwischen der jeweiligen Nockenscheibe 35 und dem Steuerrad 25 ermöglicht. Nach erfolgter Einstellung werden die Nockenscheiben über den bereits erwähnten Reibschluß von dem Steuerrad angetrieben mitgenommen. Die Einstellung erfolgt daher unter Überwindung der Reibkraft. Bei Antrieb des Steuerrades 25 vom Bewegungsübertragungsglied 5 des Antriebes aus werden die Einstellglieder frei von Angriff durch eine einstellende Hand mitgedreht.

**Patentansprüche**

1. Getriebe zur Überführung einer rotatorischen in eine translatorische Bewegung, vorzugsweise angeschlossen an ein Antriebsmotoraggregat, insbesondere für das Bewegen von Gegenstände über eine bestimmte, gegebenenfalls justierend einstellbare Strecke hinweg, wie Torblätter, mit einem Rotationsantrieb und einem translatorisch bewegbar gehaltenen Bewegungsübertragungsglied (5), das an den Antrieb im Bereich einer Führung (6) - insbesondere über eine formschlüssige Getriebeverbindung - getrieblich angeschlossen ist, **dadurch gekennzeichnet,** daß an dem Bewegungsübertragungsglied (5) ein Steuerrad (25) über einen die Translationsbewegung des Bewegungsübertragungsgliedes (5) in eine Rotationsbewegung des Steuerrades (25) wandelnden Verzahnungseingriff (26, 27) angeschlossen ist und daß an dem Steuerrad (25) wenigstens ein Betätigungsglied (28, 29) für den Angriff an wenigstens einem Schalter (30) - End- und gegebenenfalls Zwischenendschalter - vorgesehen ist.

2. Getriebe nach Anspruch 1, **dadurch gekennzeichnet,** daß an dem Bewegungsübertragungsglied (5) eine Verzahnung (26) ausgebildet ist, deren Zähne sich in einem spitzen Winkel zur translatorischen Bewegungsrichtung des Bewegungsübertragungsgliedes (5) erstrecken und in Zähne einer Verzahnung (27) eingreifen, die über den Stirnrandbereich des Steuerrades (25) geführt ist, welche Verzahnungen den Verzahnungseingriff (26, 27) bilden.

3. Getriebe nach Anspruch 2, **dadurch gekennzeichnet,** daß der Verlauf der Zähne der Verzahnung (27) im Stirnkantenbereich des Steuerrades (25) spitzwinklig zur Rotationsachsrichtung des Steuerrades ausgerichtet ist, so daß bei Eingriff der Verzahnung (26) des Bewegungsübertragungsgliedes (5) in die Verzahnung (27) des Steuerrades (25) dessen Rotationsachse parallel zur translatorischen Bewegungsrichtung des Bewegungsübertragungsgliedes (5) gerichtet ist.

4. Getriebe nach einem der Ansprüche 1 bis 3, **dadurch gekennzeichnet**, daß das Bewegungsübertragungsglied (5) in Bewegungsrichtung gesehen in wenigstens zwei Stränge (7, 8) längsgeteilt ausgebildet ist, die einen Endes außerhalb einer Führung (6) quer zur Führungsrichtung verformbar jeweils für sich getrennt geführt und anderen Endes zusammengeführt ineinandergreifend gegen ein seitliches Entfernen voneinander gehalten werden.

5. Getriebe nach Anspruch 4, **dadurch gekennzeichnet**, daß die Stränge (7, 8) jeweils aus aufeinanderfolgenden Abschnitten (14) bestehen, die über eine Verzahnung (9) derart ineinandergreifen, daß jeder Abschnitt (14) des einen Stranges (7 bzw. 8) in jeden der gegenüberliegenden Abschnitte des anderen Stranges (8 bzw. 7) im zusammengeführten Zustand in Zug- und Druckrichtung formschlüssig eingreift.

6. Getriebe nach Anspruch 4, **dadurch gekennzeichnet**, daß die Stränge (7, 8) jeweils durchgehend mit einer ununterbrochenen Verzahnung (9) versehen und in ihrem bezüglich der Zähne der Verzahnung (9) gesehen verbleibendem Bandquerschnitt senkrecht zur Längsrichtung der Führung (6) gesehen nach Werkstoff und/oder Dicke leicht verformbar ausgebildet sind.

7. Getriebe nach Anspruch 5 oder 6, **dadurch gekennzeichnet**, daß die Gewindeausbildung (26) des Bewegungsübertragungsgliedes (5) an zumindest einem der beiden Stränge (7 oder 8) ausgebildet ist, vorzugsweise unter Einschluß der einen Zahnprofilstirnseiten der ineinandergreifenden Verzahnung (9) beider Stränge (7, 8) an einer Fläche, die etwa senkrecht zur Verformungsrichtung der Stränge (7, 8) verläuft.

8. Getriebe nach einem der Ansprüche 1 bis 7, **dadurch gekennzeichnet**, daß das bzw. die Betätigungsglieder (28, 29) in verschiedene Umfangsstellungen an dem Steuerrad (25) einstellbar sind.

9. Getriebe nach Anspruch 8, **dadurch gekennzeichnet**, daß das bzw. die Betätigungsglieder (28, 29) als Nocken wenigstens einer Nockenscheibe (31) ausgebildet ist bzw. sind, die in koaxialer Anordnung zu und unter stirnseitigem Reibangriff an dem Steuerrad (25) angeordnet ist und über eine Kegelradverzahnung (32, 34) von einem Einstellglied (33) aus durch Verdrehen von Hand hinsichtlich ihrer Relativdrehstellung zum Steuerrad (25) einstellbar ist.

10. Getriebe nach Anspruch 8, **dadurch gekennzeichnet**, daß das bzw. die Betätigungsglieder (28, 29) als Nocken wenigstens einer Nockenscheibe (35) ausgebildet ist bzw. sind, die in koaxialer Anordnung zu und unter stirnseitigem Reibangriff an dem Steuerrad (25) angeordnet ist und über eine Stirnradverzahnung (36, 38) von einem Einstellglied (37) aus durch Verdrehen von Hand hinsichtlich ihrer Relativdrehstellung zum Steuerrad (25) einstellbar ist.

Fig. 1

Fig. 2

Fig. 4

Fig. 5

Fig. 3

Fig. 6

Fig. 7

Fig. 8

Fig. 9

**Europäisches**
**Patentamt**

# EUROPÄISCHER
# RECHERCHENBERICHT

Nummer der Anmeldung

## EP 91 10 8544

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 232 803  (HÖRMANN)  * das ganze Dokument * | 1,4-6 | F 16 H 19/00  E 06 B 9/08 |
| | - - - | | |
| A | DE-C-2 848 541  (KOMBI-LIFT)  * Figuren 1, 3 * | 1 | |
| | - - - | | |
| A | CA-A-1 201 136  (DOORLEC) | | |
| | - - - - - | | |

|  | RECHERCHIERTE SACHGEBIETE (Int. Cl.5) |
|---|---|
| | F 16 H  E 05 F  E 06 B  H 01 H |

Der vorliegende Recherchenbericht wurde für alle Patentansprüche erstellt

| Recherchenort | Abschlußdatum der Recherche | Prüfer |
|---|---|---|
| Berlin | 12 September 91 | GERTIG I. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus anderen Gründen angeführtes Dokument

 

& : Mitglied der gleichen Patentfamilie,
    übereinstimmendes Dokument